Europäisches Patentamt

European Patent Office

Office européen des brevets

(19)

(11) Veröffentlichungsnummer : **0 076 374**
**B1**

(12) # EUROPÄISCHE PATENTSCHRIFT

(45) Veröffentlichungstag der Patentschrift :
**11.12.85**

(51) Int. Cl.⁴ : **B 60 R 22/02**

(21) Anmeldenummer : **82107407.7**

(22) Anmeldetag : **14.08.82**

(54) **Umlenkbeschlag für einen Sicherheitsgurt.**

(30) Priorität : **02.10.81 DE 8128937 U**

(43) Veröffentlichungstag der Anmeldung :
**13.04.83 Patentblatt 83/15**

(45) Bekanntmachung des Hinweises auf die Patenterteilung : **11.12.85 Patentblatt 85/50**

(84) Benannte Vertragsstaaten :
**DE FR GB IT SE**

(56) Entgegenhaltungen :
**DE-A- 2 628 399**
**DE-A- 2 912 185**
**DE-U- 8 128 937**

(73) Patentinhaber : **Autoflug - Stakupress GmbH & Co.**
**In de Tarpen 71-99**
**D-2000 Norderstedt (DE)**

(72) Erfinder : **Krautz, Kurt, Ing.-grad.**
**Zum Weitblick 1**
**D-2107 Rosengarten 3 (DE)**

(74) Vertreter : **Glawe, Delfs, Moll & Partner Patentan-**
**wälte**
**Postfach 26 01 62 Liebherrstrasse 20**
**D-8000 München 26 (DE)**

## Beschreibung

Die Erfindung bezieht sich auf einen Umlenkbeschlag für einen Sicherheitsgurt, insbesondere eines Automobils, gemäß dem Oberbegriff des Anspruchs 1.

Man strebt bei Umlenkleisten für Sicherheitsgurte einen großen Krümmungsradius an, weil der Durchlaufwiderstand des Gurtes bei Krümmung um einen kleinen Krümmungsradius infolge der größeren inneren Reibung größer ist. Auch der Gurtverschleiß ist aus diesem Grund bei Verwendung von Umlenkleisten geringen Durchmessers größer. Erwünscht ist daher ein großer Umlenkradius. Jedoch ist dem Krümmungsradius eine Umlenkleiste aus Gewichts- und Kostengründen eine Grenze gesetzt. Er muß nämlich aus Stahl bestehen, um die gegebenenfalls hohen Umfallkräfte aufnehmen zu können. Es ist schon versucht worden, den Durchmesser der Gleitflächen einer Umlenkleiste dadurch zu vergrößern, daß diese mit einer dickeren Zusatzleiste aus Kunststoff versehen wird. Es hat sich jedoch gezeigt, daß beim Unfall, wenn der Sicherheitsgurt unter hoher Spannung mit hoher Geschwindigkeit über die Umlenkleiste geführt wird, an einer Kunststoffumlenkfläche hohe Temperaturen auftreten, die zum Anschmelzen der Umlenkfläche oder gar der Gurtoberfläche und damit gegebenenfalls zum Versagen des Gurtes führen können. Es kann hier dahingestellt bleiben, ob beim Gleiten über Stahlflächen diese hohen Temperaturen infolge rascherer Wärmeableitung oder infolge anderer Reibungsmechanismen nicht auftreten. Wichtig ist jedenfalls, daß der Gurt beim Unfall ausschließlich mit der Stahloberfläche der Umlenkleiste zusammenwirkt.

Ein Umlenkbeschlag der gattungsgemäßen Art ist aus der DE-A 26 28 399 bekannt. Dessen bei normaler Benutzung von einer Zusatzleiste abgedeckte Stützleiste trägt Zähne, die nach einer Verformung der Zusatzleiste unter einer Unfallbelastung in den Gurt eindringen, um diesen festzuhalten. Die damit verbundene Verletzung des Gurts kann aber noch leichter zu dessen Versagen führen als die oben erwähnte Erhitzung.

Bei einem aus DE-A-2 612 185 bekannten Umlenkbeschlag ähnlicher Art ist der Kunststoffummantelten Stütz- und Umlenkleiste eine Sollbruchstelle aufweisende Zusatzleiste aus Kunststoff mit Abstand vorgelagert.

Bei Überbelastung bricht die Zusatzleiste und löst sich vollständig vom Beschlag, um die Überbelastung sichtbar anzuzeigen, jedoch wird der Gurt dann von der Kunststoffummantelung der Stützleiste umgelenkt, die durch Reibungshitze schmelzen und das Gleiten des Gurtes behindern kann.

Der Erfindung liegt die Aufgabe zugrunde, einen Beschlag der genannten Art so auszubilden, daß bei einem Unfall das unbehinderte gleitbare Umlenken des Gurtes an dem Umlenkbeschlag gewährleistet ist.

Die erfindungsgemäße Lösung ist im Patentanspruch 1 angegeben.

Dies hat den Vorteil, daß während der normalen Benutzung des Kraftfahrzeugs die Umlenkleiste dank der Zusatzleiste einen großen Krümmungsradius und damit einen geringen Gurtdurchlaufwiderstand bietet, während bei der Unfallsbeanspruchung die Zusatzleiste abfällt, bevor die Spannung im Gurt so hoch ist, daß im Zusammenwirken des Gurts mit der Kunststoffoberfläche irgendein Schaden eintreten kann. Wenn man beispielsweise die Gurtspannung, bei der solche Schäden auftreten könnten, auf 10 kN schätzt, kann man die Befestigung der Zusatzleiste an der Umlenkleiste so dimensionieren, daß sie sich bei beispielsweise 2 bis 6 kN löst.

Da die Umlenkleiste im Hinblick auf die Unfallbelastung gute Umlenkeigenschaften haben muß, wird sie im allgemeinen zumindest auf der Oberseite zylindrisch ausgeführt. Sie weist damit an ihrer Oberseite zueinander konvergierende Flächenteile auf. Die Zusatzleiste ist vorzugsweise so ausgebildet, daß sie die Umlenkleiste im Bereich dieser konvergierenden Flächenteile von der Unterseite her beidseitig nachgiebig umklammert. In diesem Zusammenhang hat eine zylindrische Ausbildung der Umlenkleiste den weiteren Vorteil, daß eine lose aufgeklemmte Zusatzleiste sich im Winkel gleichmäßig und weitgehend spannungsfrei einstellen kann.

Nach einer Weiterbildung der Erfindung ist die Zusatzleiste so gestaltet, daß ihre Umlenkfläche von zwei Querschnittsschenkeln gebildet ist, die oben zur Bildung einer die Umlenkleiste aufnehmenden, hinterschnittenen Nut konviergieren und unterhalb der Umlenkleiste durch eine federnde Materialbrücke verbunden sind, die zweckmäßigerweise nahe der Unterfläche der Umlenkleiste gelegen ist. Diese Formgebung hat den Vorteil, daß die auf die beiden Schenkel ausgeübte Gurtkraft eine Hebelwirkung im Sinne eines Öffnens der die Umlenkleiste umklammernden Schenkelteile ausübt.

Umlenkbeschläge der von der Erfindung betroffenen Art finden sich in Kraftfahrzeugen vornehmlich an den Seitenholmen zur Umlenkung des von unten von einer Automatikrolle kommenden Gurtstranges nach vorne/innen. Dabei stellt sich die Umlenkleiste so ein, daß die Umlenkflächen mehr oder weniger nach oben weisen. Auf diesen Einbauzustand sind die im Zusammenhang dieser Beschreibung verwendeten Begriffe Oberseite und Unterseite zu beziehen. Allgemeiner gesprochen ist die Oberseite diejenige Seite der Umlenkleiste, die in Richtung der Winkelhalbierenden der umgelenkten Gurtstränge auf der Seite des von diesen Strängen gebildeten stumpfen Winkels liegt ; die Unterseite liegt im Bereich des spitzen Winkels zwischen den umgelenkten Gurtsträngen.

Die Ausführung, bei der die Gurtleiste die Umlenkleiste nachgiebig von unten her umklammert, hat den Vorteil einer sehr einfachen Montage.

Jedoch stellt sie nicht die einzige im Rahmen des Erfindungsgedankens mögliche Ausführungsform dar. Beispielsweise kann die Zusatzleiste von zwei Leistenhälften gebildet sein, die beidseits der Umlenkleiste angeordnet und durch Bohrungen in der Umlenkleiste durch Nieten begrenzter Kraft miteinander verbunden sind, die bei einer bestimmten Kraftschwelle abscheren. Es ist auch denkbar, daß die die Umlenkflächen bildenden Schenkel der Zusatzleiste oberhalb der Umlenkleiste einstückig miteinander verbunden sind, wobei aber der Verbindungssteg so dünn bemessen ist, daß er bei hoher Gurtbelastung reißt.

Die Erfindung wird im folgenden näher unter Bezugnahme auf die Zeichnung erläutert, die vorteilhafte Ausführungsbeispiele veranschaulicht. Es zeigen :

Figur 1 eine Seitenansicht einer ersten Ausführungsform,

Figur 2 eine Schnittansicht derselben Ausführungsform,

Figur 3 einen Schnitt durch eine zweite und

Figur 4 einen entsprechenden Schnitt durch eine dritte Ausführungsform.

Der Beschlag besteht aus einer Lasche 1 aus gebogenem Stahlblech mit Befestigungsbohrung 2 und einer von der Lasche starr gehaltenen Öse 3 aus gebogenem Rundstahl, deren gerader unterer Abschnitt 4 die Umlenkleiste für den nicht dargestellten Sicherheitsgurt bildet. Die Umlenkleiste hat typischerweise einen Durchmesser von 8 mm.

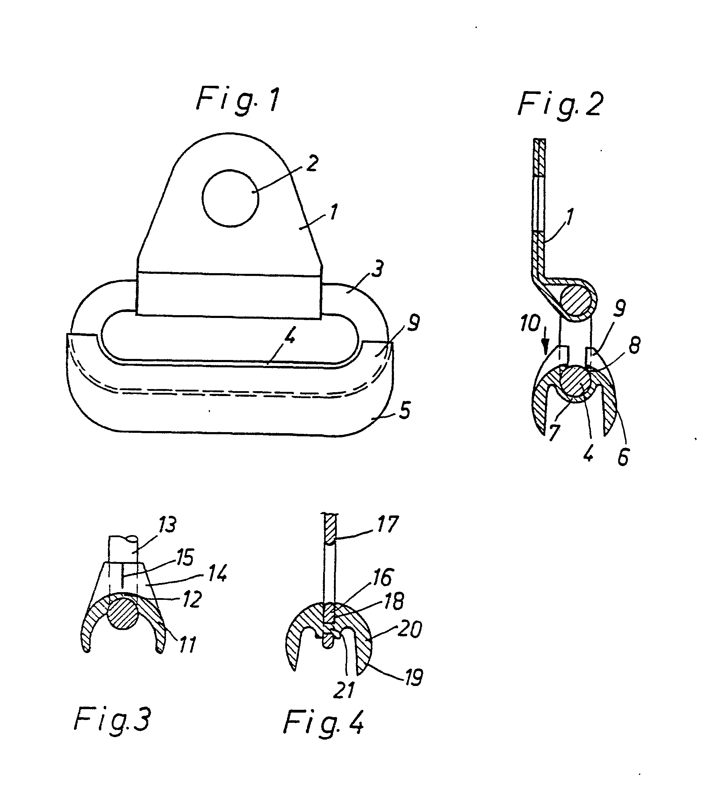

In der Ausführungsform gemäß Fig. 1 und 2 ist die Zusatzleiste 5 ein Kunststoff-Spritzgußteil aus Polyamid, Polypropylen, Polyvinylchlorid oder ähnlichem Kunststoff mit hinreichender Festigkeit, Formbeständigkeit, Härte und günstigen Gleiteigenschaften. Es besteht im Querschnitt aus zwei Schenkeln 6, die durch eine Brücke 7 miteinander starr und einstückig verbunden sind und zwischen ihren oberen, zueinander konvergierenden Abschnitten 8 eine hinterschnittene Nut enthalten, die dem zylindrischen Querschnitt der Umlenkleiste 4 möglichst nahekommend geformt ist. Die Oberflächen der Schenkel 6 folgen einer Zylinderfläche mit einem Durchmesser von ungefähr 20 mm. An den Enden sind sie im Bereich 9 an den gekrümmten Teilen der Öse 3 hochgezogen, um die Bildung reibender Kanten an den Enden zu vermeiden.

Der gespannte Sicherheitsgurt übt auf die Schenkel 6 eine Kraft aus, die bei jedem Schenkel eine Komponente im Sinne des Pfeils 10 enthält, die die Zusatzleiste von der Umlenkleiste 4 abzuziehen trachtet. Bei der dargestellten Anordnung, bei welcher die Schenkel durch eine nahe der Umlenkleiste 4 befindliche Materialbrücke 7 miteinander verbunden sind, erzeugt diese Kraft auch noch bei jedem Schenkel ein Biegemoment, das die Schenkelabschnitte 8 voneinander zu trennen trachtet und damit die Lösung der Zusatzleiste von der Umlenkleiste erleichtert.

Durch geeignete Dimensionierung der Zusatzleiste läßt sich die Gurtspannung, bei welcher die Zusatzleiste sich löst, leicht bestimmen.

Bei der Ausführung gemäß Fig. 3 sind die Profilschenkel 11 oberhalb der Umlenkleiste 4 durch eine dünne Materialbrücke 12 miteinander verbunden. Der an den runden Teilen 13 der Öse 3 gezogene Leistenteil 14 ist bei 15 geschlitzt. Überschreitet die Gurtspannung eine vorbestimmte Kraftschwelle, so reißt die dünne Materialbrücke 12 und die voneinander getrennten Schenkel 11 fallen von der Umlenkleiste ab.

Fig. 4 zeigt eine Umlenkleiste 16 aus gestanztem Blechmaterial 17. An die Umlenkleiste, die bei 18 gelocht ist, ist die Zusatzleiste 19 angespritzt, deren Schenkel 20 durch die Bohrung 18 hindurch vermittels einer nietartigen, dünnen Materialbrücke 21 miteinander verbunden sind. Diese Materialbrücke ist so dimensioniert, daß sie abschert, wenn die Gurtspannung ein vorbestimmtes Maß überschreitet. Die Schenkel 20 lösen sich dann von der Umlenkleiste 16.

Im normalen Betrieb bestimmt die Zusatzleiste jeweils den Krümmungsradius und damit sowie aufgrund ihrer eigenen günstigen Gleiteigenschaften den beim Durchziehen des Sicherheitsgurtes auftretenden Widerstand. Wenn die Gurtspannung ein vorbestimmtes Maß überschreitet, das im normalen Betrieb nicht auftritt und auf die Möglichkeit extremer Gurtbelastung hindeutet, wie sie beim Unfall auftreten kann, löst sich die Zusatzleiste von der Umlenkleiste, so daß der Sicherheitsgurt nur noch durch die Umlenkleiste geführt wird und keine Kunststoffteile im Gleitbereich verbleiben, die die Funktion des Sicherheitsgurtes gefährden könnten.

**Patentansprüche**

1. Umlenkbeschlag für einen Sicherheitsgurt, insbesondere eines Automobils, mit einer Stützleiste (4) aus Stahl und einer auf diese aufgesetzten Zusatzleiste (5, 19) aus Kunststoff, welche für die Umlenkung des Gurtes eine Umlenkfläche von größerem Krümmungsradius als der der Oberfläche der Stützleiste aufweist und mit der Stützleiste durch eine bei Überbelastung nachgebende Verbindung so verbunden ist, daß sie bei Überbelastung durch den Gurt in eine die Stützleiste freigebende Lage gebracht wird und der Gurt an der Stützleiste direkt anliegt, dadurch gekennzeichnet, daß die Stützleiste (4) als Umlenkleiste mit einer gekrümmten Umlenkfläche für den Gurt ausgebildet ist und daß die Verbindung der Zusatzleiste (5, 19) mit der Stützleiste (4) derart ist, daß sich die Zusatzleiste (5, 19) bei der Überbelastung von der Stützleiste löst und der Gurt auf der dadurch vollständig freigegebenen Umlenkfläche der Stützleiste (5) gleitbar aufliegt.

2. Umlenkbeschlag nach Anspruch 1, dadurch gekennzeichnet, daß die Umlenkleiste (4) zumindest an ihrer Oberseite von konvergierenden Flächenteilen begrenzt ist und im Bereich dieser Flächenteile von der an ihrer Unterseite angeordneten Zusatzleiste (5) beidseitig nachgiebig umklammert ist.

3. Umlenkbeschlag nach Anspruch 2, dadurch gekennzeichnet, daß die Umlenkleiste (4) zylindrisch ist und die Zusatzleiste (5) lose aufgeklemmt ist.

4. Umlenkbeschlag nach Anspruch 2 oder 3, dadurch gekennzeichnet, daß die Umlenkfläche für den Sicherheitsgurt an zwei Querschnittsschenkeln (6) der Zusatzleiste (5) gebildet sind, die oben zur Bildung einer die Umlenkleiste aufnehmenden, hinterschnittenen Nut konvergieren und unterhalb der Umlenkleiste durch eine federnde Materialbrücke 7 verbunden sind.

5. Umlenkbeschlag nach Anspruch 4, dadurch gekennzeichnet, daß die Materialbrücke (7) nahe der Unterfläche der Umlenkleiste (4) gelegen ist.

### Claims

1. A deflection mounting intended for a safety belt, more especially of a motor-car, and comprising a supporting strip (4) made of steel and an additional strip (5, 19), which has been placed on the latter and is made of plastics material and, for the deflection of the belt, has a deflection surface whose radius of curvature is larger than that of the surface of the supporting strip and which is connected to the supporting strip by way of a connection, which yields if overloading occurs, so that if overloading occurs it is brought by the belt into a position releasing the supporting strip and the belt directly abuts the supporting strip, characterised in that the supporting strip (4) as the deflection strip is formed with a curved deflection surface for the belt, and in that the connection of the additional strip (5, 19) to the supporting strip (4) is such that the additional strip (5, 19) is detached from the supporting strip upon overloading and the belt rests slidably on the deflection surface of the supporting strip (5), which has been completely released as a result.

2. A deflection mounting as claimed in Claim 1, characterised in that the deflection strip (4) is bounded, at least at its top, by converging surface parts and, in the zone of these surface parts, is resiliently embraced on both sides by the additional strip (5) provided at its bottom.

3. A deflection mounting as claimed in Claim 2, characterised in that the deflection strip (4) is cylindrical and the additional strip (5) has been loosely clamped on.

4. A deflection mounting as claimed in Claim 2 or 3, characterised in that the deflection surface for the safety belt is formed on two cross-sectional legs (6) of the additional strip (5), which converge at the top for the formation of an undercut groove receiving the deflection strip and are connected beneath the deflection strip by an elastic material bridge 7.

5. A deflection mounting as claimed in Claim 4, characterised in that the material bridge (7) is located close to the bottom surface of the deflection strip (4).

### Revendications

1. Pièce de renvoi pour une ceinture de sécurité, en particulier d'une automobile, comportant une barre d'appui (4) en acier, sur laquelle est adaptée une barre accessoire (5, 19) en matière plastique qui présente, pour le renvoi de la ceinture, une surface de renvoi dont le rayon de courbure est plus grand que celui de la surface de la barre d'appui et qui est unie à la barre d'appui par un assemblage destiné à céder en cas de surcharge, de telle manière qu'en cas de surcharge, elle soit placée par la ceinture dans une position qui libère la barre d'appui et que la ceinture soit directement en contact avec la barre d'appui, caractérisée en ce que la barre d'appui (4) est réalisée sous forme de barre de renvoi avec une surface courbe de renvoi pour la ceinture, et en ce que l'assemblage de la barre accessoire (5, 19) à la barre d'appui (4) est tel qu'en cas de surcharge, la barre accessoire (5, 19) se détache de la barre d'appui et que la ceinture s'applique à glissement sur la surface de renvoi, ainsi complètement libérée, de la barre d'appui (4).

2. Pièce de renvoi selon la revendication 1, caractérisée en ce que la barre de renvoi (4) est limitée, au moins du côté supérieur, par des fractions de surface qui convergent et en ce que dans la région de ces fractions de surface, elle est saisie des deux côtés, à la manière d'une pince capable de céder, par la barre accessoire (5) qui est disposée du côté inférieur de cette barre de renvoi.

3. Pièce de renvoi selon la revendication 2, caractérisée en ce que la barre de renvoi (4) est cylindrique et en ce que la barre accessoire (5) l'enserre de manière lâche.

4. Pièce de renvoi selon la revendication 2 ou 3, caractérisée en ce que les surfaces de renvoi pour la ceinture de sécurité sont formées sur deux branches en coupe transversale (6) de la barre accessoire (5), branches qui convergent en haut pour former une rainure en dépouille qui reçoit la barre de renvoi et qui sont reliées, audessous de la barre de renvoi, par un pont de matière élastique (7).

5. Pièce de renvoi selon la revendication 4, caractérisée en ce que le pont de matière (7) est placé en position attenante à la surface inférieure de la barre de renvoi (4).

Fig. 1

Fig. 2

Fig. 3

Fig. 4